# EUROPEAN PATENT APPLICATION

(11) **EP 4 793 521 A2**
(43) Date of publication of application: **19.08.2026**
(21) Application number: 26153782.3
(22) Date of filing: 23.01.2026
(51) Int. Cl.: F16F 9/512, F16F 9/34, F16F 9/516

(54) **ADAPTIVE DAMPER**

(30) Priority: 27.01.2025 GB 202501128
(71) Applicant: Titus d.o.o. Dekani, 6271 Dekani (SI)
(72) Inventor: PECAR, David, 6276 Pobegi (SI)
(74) Representative: Treeby, Philip David William

(57) **Abstract**

A damper (10) with a damper housing, said damper housing comprising a piston (12) operable to move within the damper housing, and a piston rod (14) operable to engage with said piston (12). The damper housing further including damping fluid operable to be urged from a first side of the piston (12) to a second side of the piston (12) via a bore (18). A closure element (28) located in said bore (18) and movable from a first limit to a second limit with respect to the piston (12), wherein resistance to movement of the damping fluid is reduced as the closure element (28) moves from the first limit to the second limit.

## Description

The present invention relates to an adaptive damper.

### Background

It is desirable to have cabinet drawers that soft close. Such arrangements are extensively well known. Said drawers are operable to close softly due to the inclusion of dampers in the cabinet.

Dampers in cabinets are known. However, due to the fact that they have to fit unobtrusively in the drawer, or hinges, sliding systems, toilet lids or other such devices, said dampers tend to be small. As such, they can be fragile, and malfunction or break when a large force is applied thereto. It is therefore desirous to provide a damper that can provide a soft close drawer, but that is more robust when a significant force, such as when a drawer is closed firmly, or even slammed, is applied.

EP3652402B1 discloses a furniture fitting with a housing. A fluid chamber is arranged in the housing containing a damping fluid. A piston having an 'overload opening' is displaceably arranged in the fluid chamber. An overload safety device is provided in the piston and has a closure element pressurized by a force storage member. The closure element blocks the overload opening of the piston below a predetermined threshold value of a pressure application to the piston and unblocks the overload opening of the piston against a force of the force storage member above the predetermined threshold value. Due to the unblocking of the overload opening, a fluid-conductive connection between a high-pressure side and a low-pressure side of the fluid chamber is unblocked.

The disadvantage of this design is that there is no adaptive damper force when the pressure is below a specified threshold. It is therefore advantageous to provide an enhanced adaptive damper that can mitigate the above problems.

### Summary of the Invention

The present invention provides an adaptive damper that adjusts the damping characteristics of the damper dependent on the force applied to the damper.

According to the present invention there is provided a damper with a damper housing, said damper housing comprising a piston operable to move within the damper housing, and a piston rod operable to engage with said piston, said damper housing including damping fluid operable to be urged from a first side of the piston to a second side of the piston via a bore, and a closure element located in said bore and movable from a first limit to a second limit with respect to the piston, wherein resistance to movement of the damping fluid is reduced as the closure element moves from the first limit to the second limit.

The present arrangement allows the damping fluid to transfer across the piston more easily as the force/closing velocity on the piston increases.

Preferably, the movement of the closure element corresponds to a magnitude of a force applied to the piston rod. It is preferred that, at the closure element's second limit, the damping fluid is substantially free to flow from the first side of the piston to the second side of the piston.

It is preferred that the closure element remains at the first limit until the force applied to the piston rod reaches a threshold value. It is preferred that the pressure exerted by the damping fluid on the piston increases linearly with applied force below said threshold, and that the pressure exerted by the damping fluid on the piston increases non-linearly with applied force above said threshold. In preferred embodiments the exerted pressure substantially does not increase after a second threshold. It will be appreciated that this relationship holds for applied forces to the piston rod up to the level of a severe slamming of a drawer.

It is preferred that the bore comprises a stepped portion, such that a first part of the bore has a first diameter, and a second part of the bore has a second diameter. Typically, the second diameter is smaller than the first diameter. It is particularly preferred that the closure element is dimensioned to fit within the second part of the bore to substantially block the bore. It is preferred that the diameter of closure element is smaller than the first part of the bore.

Preferably, when the closure element is at the first limit of its travel it is at least partially contained within the second part of the bore. It is further preferred that when the closure element is at its second limit it is contained substantially solely with the first part of the bore. At the second limit, a toroidal aperture is created between the closure element and the first part of the bore. The damping fluid is operable to pass through said toroidal aperture.

It is preferred that the piston comprises means to urge the closure element towards the first limit. Most preferably a compression spring urges the closure element to the first limit. Thus, in use, the closure element is typically located in the end second part of the bore for substantially most of the time.

In preferred arrangements, the piston comprises means to limit the closure element's compression of the compression spring. Such means may be solid element, such as a rod. Advantageously, the rod may be housed within the compression spring. One end of the rod is operable to engage with the leading surface of the closure element as it moves to its second limit. In a variant arrangement the means to limit the closure element's compression of the compression spring may be instead attached to the piston. Or it may be a separate piece.

Optionally, the closure element may be partially retained in the second part of the bore even at the second limit. Such an arrangement may be when the length of the closure element exceeds the distance from the end of the rod to the stepped portion of the bore.

The second part of the bore preferably comprises a channel in its side wall. When the closure element is blocking the second part of the bore, the damping fluid is operable to move across the piston via the channel. As the closure element moves toward the second limit, it preferably reduces the length of the channel.

Providing a channel through which damping fluid passes during a damping stroke that can be varied in length allows for adaptive damping. The channel shortens as the force on the piston rod increases, and hence allows the pressure to be relieved more easily.

In preferred arrangements multiple channels may be located in the second part of the bore. The channels may traverse different distances in the bore, so that channels open to the damping fluid at different positions of the closure element.

The channels are preferably uniform in width, or, alternatively, may be tapered. Thus, the channels can be tailored to suit the damping profile required from the damper.

According to a second aspect of the present invention there is provided a damper comprising a piston assembly that notionally divides the damper into first and second chambers, wherein force on the piston assembly causes pressure in said first chamber such that damping fluid disposed in said damper is urged from said first chamber to said second chamber, wherein pressure increases linearly with velocity until a predetermined threshold, and non-linearly thereafter.

Preferably, the non-linear relationship is achieved by varying the length of a passageway through which the damping fluid travels.

It is also preferred that the length of the passageway is varied by relative movement of a closure element.

Preferably the closure element is operable to be moved against the action of a spring by excess pressure in said first chamber.

In order that the present invention be more readily understood, specific embodiments thereof will now be described with reference to the accompanying drawings.

### Description of drawings

Figure 1 illustrates a damper according to the present invention.
Figure 2 illustrates a close up of section x in fig 1, with the closure element at its first limit and closing velocity v1.
Figure 3 illustrates the arrangement of figure 2, with the closure element at a point mid-way between the first limit and the second limit and velocity v2.
Figure 4 illustrates the arrangement of figure 2, with the closure element at the second limit and velocity v3.
Figure 5 shows a graph plotting force against pressure for differing positions of the closure element.
Figure 6 shows a close-up of a compression spring used to urge the closure element towards the first limit.
Figure 7 shows a close up of section x, indicating cross-section line A-A, with a longer closure element and velocity v4 or higher.
Figure 8 shows a cross-section through line A-A.
Figure 9 illustrates a variant embodiment, without a limit stop.
Figure 10 shows a graph plotting force against pressure for the embodiment of fig 7.

### Description of preferred embodiments

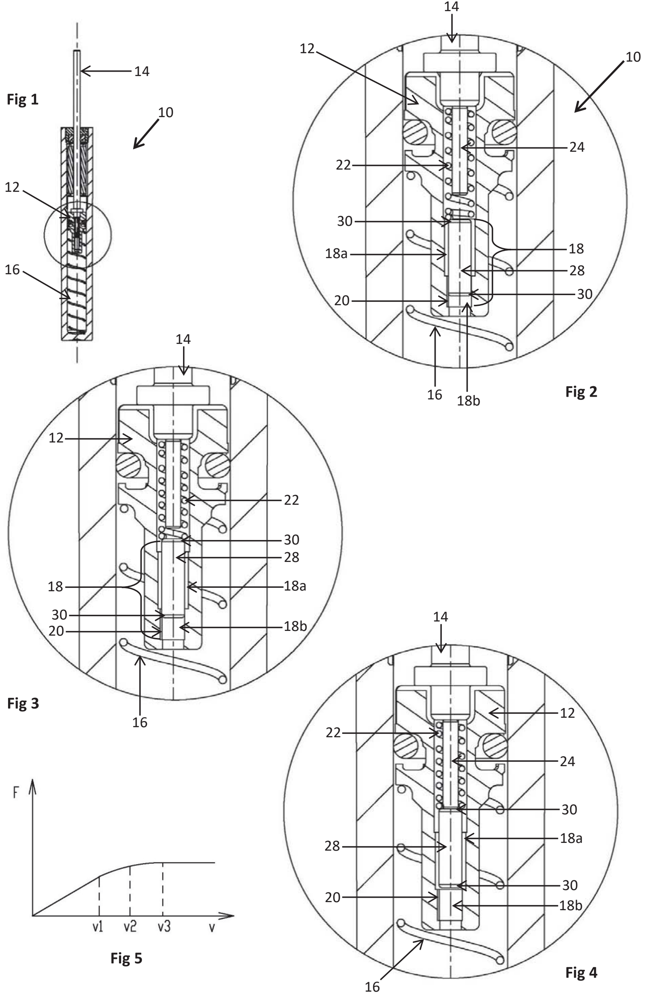

A linear damper 10 is shown in figure 1. Linear dampers are known and are often disposed in drawers to allow a soft-close utility. Dampers function by moving a fluid - typically oil - across a piston. A limited pathway is provided for the damping fluid to cause resistance to the movement, and hence a damping function.

It is desirable to provide dampers of reduced size, so as not to encroach into the drawer space, or to be unsightly. As such, modern dampers can be fragile if exposed to significant force, such as the slamming of a drawer. It is not possible to make dampers bigger to make them robust, for the reasons given above. The present arrangement provides a damper with a piston force release mechanism to mitigate a 'hard' closure of a drawer.

The damper 10 comprises a piston 12, and a piston rod 14. When a force is applied to the end of the piston rod 14, the piston is urged into the damper against the action of a spring 16. Damping fluid contained within the damper 10 is thus forced across one or more small pathways in the damper.

Figure 2 shows a close-up of the piston 12. The piston 12 comprises a bore 18 through its longitudinal centre. The bore 18 comprises a first section 18a and a second section 18b. Each section 18a, 18b has an associated diameter, with the second diameter being smaller than the first diameter. In use damping fluid is forced through the bore 18 to achieve the damping effect.

The second section of the bore 18b comprises a channel 20. The channel runs along the inside surface of the bore. As viewed in the drawings, the channel 20 runs vertically.

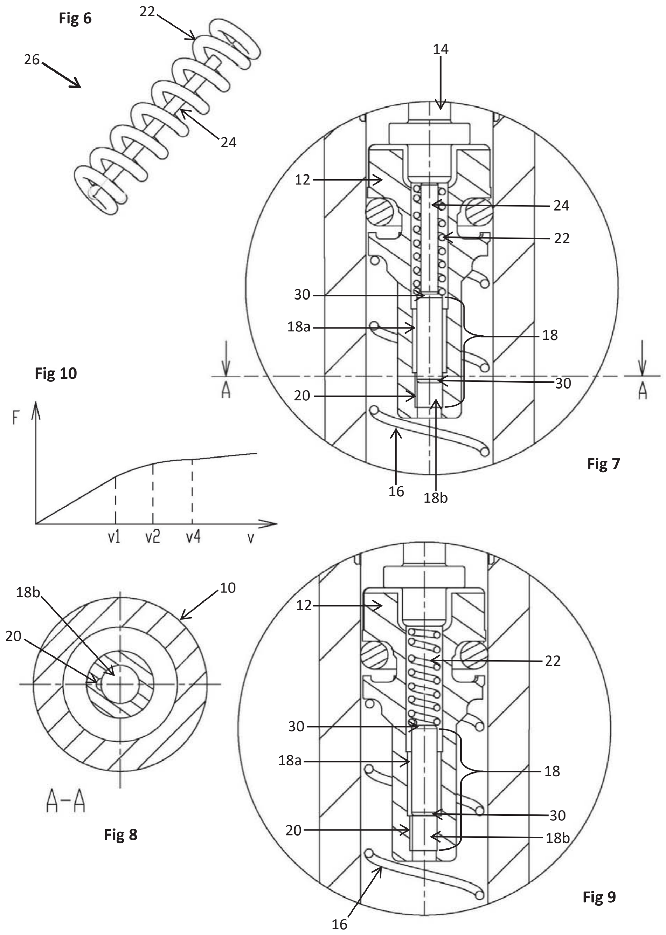

The bore 18 can also be seen in figure 7. Section A-A of figure 7 is shown in figure 8. The channel 20 is shown. The channel is much smaller that the bore section 18b. The channel 20 would be similar in the embodiments of figures 2 to 4.

A closure element 28 is disposed within the bore 18 of the piston 12. The closure element 28 is free to move within the bore 18. The diameter of the closure element 28 is substantially that of the second section of the bore 18b. Accordingly, if the closure element is disposed in the second section of the bore, said bore section 18b is substantially sealed. As such, the only pathway through the bore 18 is via channel 20.

Figure 6 shows a combination compression spring 22 and limit-stop 24. Together, these may be termed a compression unit 26. The compression unit 26 is shown on figures 2 to 4, 7 and 9, located above the closure element 28. It will be appreciated that the spring 22 extends beyond the limit-stop 24.

In use the damper is disposed in a cabinet. As a drawer is shut, the front of the drawer engages the piston rod 14 and urges it into the damper 10. The piston rod 14 pushes the piston, forcing damping fluid to travel through the channel 20 and then into the first section 18a of the bore. The diameter of the first section is bigger than the diameter of the closure element, so the damping fluid may freely flow through this section. In a normal drawer closure action that closure element does not substantially move. This is because the force on the piston rod 14 is not strong, and the resultant pressure of the damping fluid is not high. In other words, the pressure in the damper is not sufficient to overcome the strength of the compression spring 22. This scenario is shown in figure 2.

Figure 3 shows an example where more force has been used in shutting the drawer. In this scenario, the piston rod 14 is pushing the piston 12 into the damper with more force. Accordingly, the pressure on the damping fluid is seeking to push the damping fluid through the channel 20 at a greater rate. The pressure is sufficient to compress the spring 22. The pressure acts on the surface of the closure element facing downwards (as shown in the drawings) and pushes the closure element 28 to compress the spring. Thus, the closure element is forced upwards (as viewed in the drawings). As the closure element 28 moves towards the first section 18a of the bore 18, the overlap between the second section 18b and the closure element 28 reduces. Thus, the length of the channel 20 reduces, and hence the damping fluid can more easily flow through the second portion 18b of the bore 18. The shorter the channel, the less damping resistance. The shortening of the channel provides a non-linear relationship between the velocity applied on the piston and the pressure exerted on the damping fluid.

Figure 4 shows a scenario where the drawer has been slammed shut. Here, high force is applied to the piston rod 14. This force causes a high pressure on the damping fluid. Typically, the damping fluid cannot be urged through the channel sufficiently quickly to reduce such a high pressure. Absent countermeasures, the damper may be broken. In this scenario, the pressure is sufficient to compress the spring 22 to the extent that the closure element 28 is moved fully out of the second section 18b of the bore 18, and into the first section 18a. The channel 20 is thus fully exposed to bore section 18b. As such, damping fluid is free to travel through bore section 18b onto bore section 18a, thus fully relieving the pressure. It will be appreciated from figure 8 that second bore section 18b is Figure 9 shows a variant arrangement. Here, there is no limit-stop. Accordingly, the closure element 28 may be pushed into the first part of the bore to the extent that the spring 22 is completely compressed.

The channel typically comprises a uniform width. However, the channel could be tapered to achieve additional variability. For example, if the channel increased in width upwards (as shown in the drawings, i.e. towards the piston rod), the damping fluid would more easily flow therethrough as the closure element 28 is urged towards the first section 18a of the bore.

In a variant embodiment, multiple channels could be employed. Each channel could start at a different level within the second section 18b of the bore 18. Thus, as the closure element 28 is urged towards the first section 18a of the bore 18, one or more channels may be exposed, and hence available for the damping fluid to travel through.

The limit-stop 24 prevents the closure element 28 from traveling too far into the first section 18a of the bore 18. It should be appreciated that the limit-stop 24 could instead be made integral with, or fixed to, the piston. It may instead be a free piece disposed between the closure element and the piston. For example, the closure element 28 could comprise a flange that is stopped with a piston design (not shown).

The two end portions 30 of the closure element 28 are chamfered. This allows the closure element 28 to more easily engage with the compression spring 22 and be more readily inserted into the second section 18b of the bore.

Figure 5 shows a graph of force (on the piston rod 14) versus velocity (of the closing drawer). Initially the force increases linearly (diagrammatically shown in fig 2). Point v1 is the drawer velocity when the compression spring 22 begins to be compressed. After v1, there is an adaptive force range that allows a smooth transition in damping function without an immediate force release (diagrammatically shown in fig 3). This means that closure element 28 is at least partially within the second section of the bore 18b in this range. This range corresponds to the channel 20 reducing in length as the closure element 28 moves towards the first section 18a of the bore 18. The force on the piston rod 14 equates to the pressure on the damping fluid. The opening of the closure element 28 releases pressure, and hence the damper 10 is able to cope with a harder closure of the drawer, i.e. a faster velocity (diagrammatically shown in fig 4).

Figure 7 shows a variant embodiment. Here, the closure element 28 is longer than its counterpart in the embodiment of figures 2 to 4. Accordingly, the closure element cannot fully release from the second section 18b of the bore 18. It will be appreciated that the top of the closure element 28 engages with the limit-stop 24 before the bottom of the closure element 28 clears the second section 18b of the bore 18.

Figure 10 shows a graph of force (on the piston rod 14) versus velocity (of the closing drawer) for the embodiment of figure 7. Initially the force increases linearly. Point v1 is the drawer velocity when the compression spring 22 begins to be compressed. After v1, there is an adaptive force range that allows a smooth transition in damping function without an immediate force release. Up to point v4, the graph is similar to the embodiment of figures 1 to 8. After point v4, there is a linear increase in force with increasing velocity, due to the closure element remaining partly in the second part of the bore 18.

In a variant embodiment, that could be applied to any of the embodiments described above, the channel 20 could be dispensed with, and diameter of second section 18b of the bore made slightly larger than the diameter of the closure element 28. In this scenario, the diameter of the second section 18 would still be smaller than the diameter of the first section of the bore. In this arrangement, there would be provided a damper with a damper housing, said damper housing comprising a piston operable to move within the damper housing, and a piston rod operable to engage with said piston, said damper housing including damping fluid operable to be urged from a first side of the piston to a second side of the piston via a bore, said bore comprising a first section and a second section, with the first section comprising a diameter larger than the diameter of the second section, and a closure element located within the bore, wherein the diameter of the closure element is smaller than the diameter of the second section, wherein resistance to movement of the damping fluid is reduced as the closure element moves from the second section of the bore to the first section of the bore.

It is to be understood that the above description is provided for understanding, and that many variants are possible within the attached claims.

## Claims

1. A damper with a damper housing, said damper housing comprising a piston operable to move within the damper housing, and a piston rod operable to engage with said piston, said damper housing including damping fluid operable to be urged from a first side of the piston to a second side of the piston via a bore, and a closure element located in said bore and movable from a first limit to a second limit with respect to the piston, wherein resistance to movement of the damping fluid is reduced as the closure element moves from the first limit to the second limit.

2. A damper according to claim 1, wherein the movement of the closure element corresponds to a magnitude of a force applied to the piston rod.

3. A damper according to claim 1 or 2, wherein the closure element remains at the first limit until the force applied to the piston rod reaches a threshold value.

4. A damper according to claim 3, wherein the damping level increases linearly with applied force below said threshold, and that the damping level increases non-linearly with applied force above said threshold.

5. A damper according to any preceding claim, wherein the bore comprises a stepped portion, such that a first part of the bore has a first diameter, and a second part of the bore has a second diameter.

6. A damper according to any of claims 3 to 5, wherein when the closure element is at the first limit of its travel it is at least partially contained within the second part of the bore, and/or when the closure element is at its second limit it is contained substantially solely with the first part of the bore.

7. A damper according to any of claims 3 to 5, wherein at its second limit the closure element is at least partially contained within the second part of the bore.

8. A damper according to any preceding claim, wherein the piston comprises means to urge the closure element towards the first limit.

9. A damper according to claim 7, wherein the piston comprises means to limit the closure element's compression of the compression spring.

10. A damper according to any preceding claim, wherein the second part of the bore comprises one or more channels in its side wall.

11. A damper according to claim 9, wherein as the closure element moves toward the second limit, it reduces the active length of at least some of the one or more channels.

12. A damper according to claim 9 or 10, wherein at least one of the one or more channels are tapered.

13. A damper according to any of claims 10 to 12, wherein, for multiple channels, at least two channels have differing length.

14. A damper comprising a piston assembly that notionally divides the damper into first and second chambers, wherein force on the piston assembly causes pressure in said first chamber such that damping fluid disposed in said damper is urged from said first chamber to said second chamber, wherein pressure increase linearly with velocity until a predetermined force threshold, and non-linearly thereafter.

15. A damper according to claim 14, wherein the non-linear relationship is achieved by varying the length of a passageway through which the damping fluid travels.

16. A damper according to claim 15, wherein the length of the passageway is varied by relative movement of a closure element.

17. A damper according to claim 16, wherein the closure element is operable to be moved against the action of a spring by excess pressure in said first chamber.
